# FASCICULE DE BREVET EUROPEEN

(11) **EP 1 037 397 B1**
(45) Date de publication et mention de la délivrance du brevet: **27.02.2008**
(21) Numéro de dépôt: 00400686.2
(22) Date de dépôt: 16.03.2000
(51) Int. Cl.: H04B 7/12

(54) **Dispositif de transmission radio multifréquences et procédé associé**
Mehrfrequenz-Funkübertragungsvorrichtung und zugehöriges Verfahren
Multifrequency radio transmission device and corresponding method

(30) Priorité: 18.03.1999 FR 9903377
(43) Date de publication de la demande: 20.09.2000
(73) Titulaire: LEGRAND FRANCE, 87000 Limoges (FR)
(72) Inventeur: Saguin, Pascal, 38000 Grenoble (FR)
(74) Mandataire: Santarelli

(56) Documents cités:
- EP-A- 0 526 704
- US-A- 4 513 443
- KUMAGAI T ET AL: "BIT SIGNIFICANCE SELECTIVE FREQUENCY DIVERSITY TRANSMISSION" IEICE TRANSACTIONS ON COMMUNICATIONS,JP,INSTITUTE OF ELECTRONICS INFORMATION AND COMM. ENG. TOKYO, vol. 81-B, no. 3, 3 août 1998 (1998-08-03), page 545-552 XP000780110 ISSN: 0916-8516
- RADISIC V ET AL: "NOVEL ARCHITECTURES FOR HIGH-EFFICIENCY AMPLIFIERS FOR WIRELESS APPLICATIONS" IEEE TRANSACTIONS ON MICROWAVE THEORY AND TECHNIQUES,US,IEEE INC. NEW YORK, vol. 46, no. 11, PART 02, page 1901-1909 XP000785379 ISSN: 0018-9480

## Description

L'invention est du domaine de la transmission de signaux en vue de transmettre des informations ou des messages. Elle concerne plus particulièrement les dispositifs dits "sans fils", pour lesquels les informations ou messages sont transmises, par exemple entre des détecteurs et une centrale, par voie radioélectrique.

Les commandes à distance par liaison radio de type éclairage, alarme, applications domotiques, utilisent généralement une seule fréquence porteuse pour transmettre l'information. Les transmissions de messages par voie radioélectrique s'effectuent alors par l'intermédiaire d'un signal de fréquence élevée (dite porteuse unique), modulée par un signal représentant l'information à transmettre. L'inconvénient de ce type de transmission provient du fait qu'une perturbation sur ladite fréquence porteuse risque de modifier le signal modulant et de le rendre inexploitable.

Afin de fiabiliser la liaison radio, des systèmes de transmission connus utilisent plusieurs fréquences porteuses distinctes comme supports de l'information.

L'inconvénient majeur de tels systèmes est qu'ils reposent, pour un usage commun, sur l'association d'une pluralité de dispositifs de transmission, d'où une augmentation importante du prix par rapport au système mono-fréquence précédemment évoqué.

Dans les dispositifs classiques multifréquences, tels que celui décrit par EP-A-0 526 704, l'association de systèmes, en réception, écoutant une multitude de fréquences en simultané consomme énormément d'énergie. De telles installations, dans des applications de sécurité, fonctionnent sur alimentation autonome (pile, accus, batterie ...), et l'autonomie est un point important. Il faut donc chercher à limiter cette consommation.

Les buts de la présente invention sont de remédier aux inconvénients précités, et de fournir un système permettant d'améliorer la qualité de la liaison radio, particulièrement en cas de perturbation extérieure, avec une consommation réduite, et ce à faible coût.

Elle propose à cet effet un dispositif de transmission d'informations par voie radioélectrique comprenant au moins un émetteur adapté à émettre un signal sur au moins deux fréquences, alternativement et/ou simultanément, et un récepteur caractérisé en ce que le dispositif comporte des moyens pour commander l'écoute par le récepteur d'une seule des fréquences des émetteurs à la fois, et pour passer de l'écoute d'une fréquence à l'écoute d'une autre fréquence selon un critère de qualité et / ou de conformité de signal reçu prédéterminé, lesdits moyens (28) étant adaptés à activer et à alimenter en énergie à un instant donné une seule chaîne de réception d'une dite fréquence.

La présente invention sera mieux comprise par la description d'un émetteur et du récepteur associé donnée ci-dessous à titre d'exemple non limitatif et illustrée schématiquement dans les figures. Il est clair que cette description est donnée à titre d'exemple, et n'a pas de caractère limitatif. Dans les figures :
- la figure 1 représente schématiquement un dispositif d'alarme,
- la figure 2 est un schéma fonctionnel d'un émetteur selon l'invention,
- la figure 3 est un schéma fonctionnel d'un récepteur selon l'invention,
- la figure 4 illustre le schéma fonctionnel d'un émetteur-récepteur selon l'invention,
- la figure 5 illustre une variante d'émetteur à deux fréquences émises alternativement,
- la figure 6 est un schéma fonctionnel d'une variante d'émetteur à deux oscillateurs indépendants,
- la figure 7 est un schéma fonctionnel d'une autre variante d'émetteur à trois oscillateurs indépendants, permettant l'émission simultanément et/ou alternativement,
- la figure 8 est un schéma fonctionnel d'une variante de récepteur utilisant une seule antenne,
- la figure 9 est un schéma fonctionnel d'une autre variante de récepteur,
- les figures 10A et 10B illustrent des exemples d'antennes utilisables dans l'émetteur ou le récepteur selon l'invention.

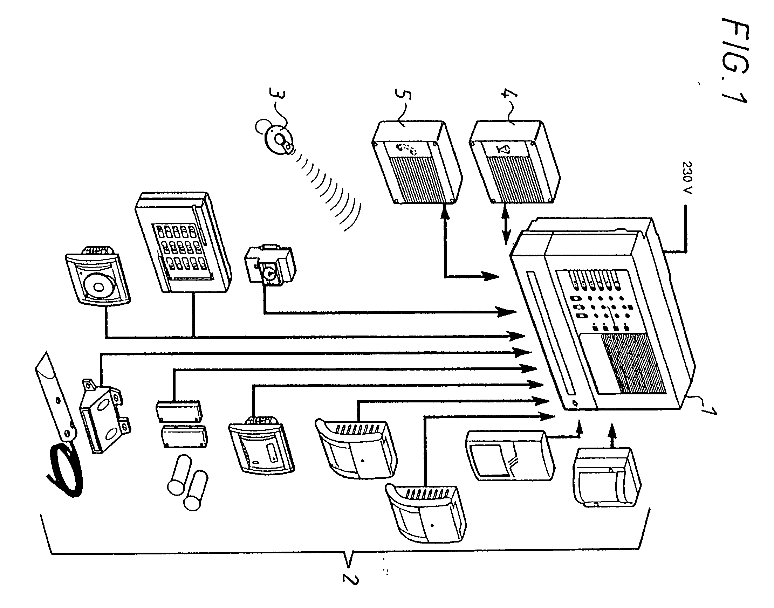

Le dispositif et le procédé selon l'invention sont destinés à prendre place au sein d'un dispositif d'alarme par liaison radio tel qu'illustré sur la figure 1. Dans un tel système, connu en soi, une centrale de traitement 1 reçoit des informations d'un certain nombre de détecteurs 2 installés en divers points du bâtiment à surveiller, et par exemple des détecteurs de mouvements, d'ouverture, de fumée, d'inondation, de panne d'appareil. La centrale de traitement 1 reçoit également des instructions émanant d'une télécommande 3 ou d'un dispositif équivalent, par exemple mural (non représenté ici).

En fonction des informations reçues de ces détecteurs 2 ou de cette télécommande 3, la centrale de traitement 1 détermine, selon une logique interne, la mise en marche éventuelle d'une sirène d'alarme 4 ou d'un transmetteur téléphonique 5, ou d'autres dispositifs adaptés à la situation détectée.

Les circulations d'informations entre les détecteurs 2, la télécommande 3 et la centrale de traitement 1, de même qu'entre la centrale de traitement 1 et les sirènes d'alarme 4 et/ou transmetteur téléphonique 5, sont dans une application de protection sans fil, réalisées par liaisons radio. Chacune de ces liaisons est alors susceptible d'accueillir un dispositif de communication selon l'invention.

En particulier, les détecteurs 2 comprennent typiquement chacun un émetteur selon l'invention, tandis que la centrale de traitement 1 et les sirènes d'alarme 4 et transmetteur téléphonique 5 comprennent chacun un dispositif émetteur récepteur selon l'invention.

Chaque détecteur 2 étant simplement équipé d'un émetteur (pour une raison de coût et de consommation électrique, puisque ces détecteurs fonctionnent sur batteries), et ne pouvant de ce fait recevoir d'informations ou de questions de la part de la centrale de traitement 1, il transmet des informations à intervalle régulier (par exemple toutes les heures) sur son état (pile encore correctement chargée etc.), ainsi que selon nécessité des informations à l'instant d'une détection (par exemple détection de fumée), en vue d'un traitement approprié par la centrale de traitement 1. On comprend que dans un tel agencement, les détecteurs peuvent par hasard émettre leurs messages simultanément, malgré la brièveté de ces messages, et une répétition de l'émission des messages est donc prévue. Ces dispositions sont de nature classique et ne seront pas détaillées ici plus avant.

Le principe de communication radio sur plusieurs fréquences exposé ci-après utilise, à titre d'exemple, l'exploitation des harmoniques d'une fréquence générée par un oscillateur unique pour en transmettre différentes fréquences porteuses résultantes. Les différentes fréquences utilisées sont des multiples de la fréquence de l'oscillateur utilisé. Pour un système fonctionnant sur N fréquences, les N canaux de transmission créés dépendent de l'oscillateur utilisé.

Les porteuses ainsi créées dépendant du même oscillateur, ce procédé associe à la fiabilité de la liaison radio une réduction du coût du produit. L'avantage de ce procédé est la réduction du nombre d'oscillateurs, et donc la diminution du coût du dispositif.

### EMETTEUR

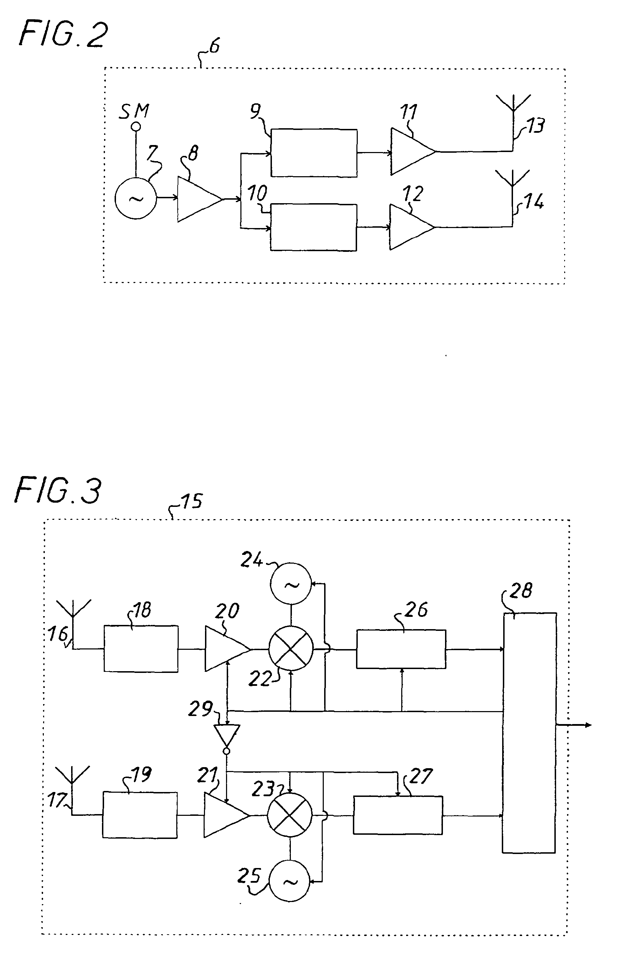

Le schéma fonctionnel d'un émetteur 6 utilisant ce principe est illustré par la figure 2. Il s'agit d'un émetteur de type émission en diversité, c'est-à-dire émettant un même message sur plus d'une fréquence.

Ledit émetteur 6 comprend un oscillateur 7, éventuellement avantageusement asservi, par exemple par un résonateur à onde acoustique surfacique (SAW), une boucle à verrouillage de phase (PLL), non représenté sur la figure 2. Il oscille à une fréquence f1.

Un signal modulant SM représentant une information à transmettre est appliqué sur l'entrée modulation (l'information à transmettre étant typiquement un message formé d'une succession de données binaires). Une modulation d'amplitude de type « tout ou rien » (en anglais OOK pour « On-Off Keying ») est utilisée dans le dispositif décrit ici à titre d'exemple non limitatif.

Dans ce dispositif, le signal émanant de l'oscillateur 7 est éventuellement avantageusement amplifié par un amplificateur 8 de type classique, connu de l'homme de l'art.

Le signal éventuellement amplifié est ensuite filtré, sur une première voie, par un filtre passe-bande 9 et, sur une seconde voie, par un filtre passe bande 10, centrés respectivement sur des fréquences fN et fM, harmoniques de la fréquence fondamentale f1 de l'oscillateur 7.

Dans ce dispositif, le système de communication radio sur 2 fréquences utilise un seul oscillateur dont on exploite la fréquence fondamentale f1 et le second harmonique f2 = 2.f1. Les fréquences filtrées consistent, dans ce cas, en la fréquence fondamentale f1 elle-même et son premier harmonique f2 = 2.f1.

Les fréquences f1 et f2 peuvent avantageusement appartenir pour l'une à la bande 434 MHz et pour l'autre à la bande 868 MHz.

Les signaux filtrés issus des filtres passe bandes 9, 10, sont amplifiés par des amplificateurs 11, 12, de type classique.

Les signaux de fréquences fN et fM amplifiés par les amplificateurs 11, 12, entrent sur des antennes 13, 14, qui rayonnent alors simultanément les fréquences fN et fM (ici f1 et 2f1 à titre d'exemple).

L'avantage de ce système est de pouvoir réaliser une émission sur plusieurs fréquences avec un seul oscillateur ; les canaux de transmission ainsi créés étant dépendants de l'unique oscillateur utilisé. Le dispositif émetteur utilise donc dans l'exemple décrit ici deux canaux de transmission à 434 MHz et 868 MHz respectivement.

### RECEPTEUR

En réception, un récepteur 15 conforme à l'invention doit être capable de démoduler les deux fréquences fN et fM non simultanément. Avec un tel récepteur 15, on choisit la fréquence de démodulation (fN ou fM) du signal, alternativement, et la consommation s'en trouve avantageusement réduite comparativement à un système classique de réception simultanée.

Un tel récepteur 15 est décrit, à titre d'exemple non limitatif, en référence à la figure 3. On constate que ledit récepteur associe deux chaînes de réception classiques, illustrées en haut et en bas de la figure 3, l'une seulement des deux chaînes étant active et alimentée en énergie à un instant donné.

Les signaux émanant des antennes 13 et 14 de l'émetteur 6 sont reçus par deux antennes 16, 17, respectivement pour les fréquences f1 et f2, du récepteur 15.

Sur chacune des chaînes de réception, le signal issu de l'antenne 16 (respectivement 17) est filtré dans un filtre passe bande 18 (respectivement 19), centré sur la fréquence f1 (respectivement f2), puis attaque un amplificateur 20 (respectivement 21) pouvant avantageusement intégrer un élément amplificateur classique, non détaillé ici.

En sortie de l'amplificateur 20 (respectivement 21), le signal entre dans un mélangeur 22 (respectivement 23), dans lequel il est combiné avec un signal émanant d'un oscillateur local 24 (respectivement 25) réglé sur une fréquence f_{Ol1} (f_{Ol2}).

L'oscillateur local de réception 24 pour f1 oscille par exemple à une fréquence fₒₗ1 égale à la différence f1-fi₁, fi₁ étant une fréquence intermédiaire pour la fréquence f1. De même, l'oscillateur local de réception 25 pour f2 oscille à une fréquence fₒₗ2 égale à la différence f1 -fi₂, fi₂ étant une fréquence intermédiaire pour la fréquence f2.

En sortie de ce mélangeur 22 (respectivement 23), le signal de fréquence fi₁ (fi₂) entre dans un démodulateur 26 (respectivement 27).

Ce dispositif est de type classique, et ses divers composants sont bien connus de l'homme du métier.

La sortie démodulée (sous forme de données binaires) provenant du démodulateur 26 (respectivement 27) entre dans un microcontrôleur 28 de type classique. Celui-ci permet entre autres de gérer l'alimentation des différentes parties actives du récepteur 15, et donc de ne pas alimenter en énergie une des chaînes de réception lorsque l'autre est seule active.

Un dispositif muni d'un inverseur 29, piloté par une commande C émise par le microcontrôleur 28, est destiné à alimenter l'une ou l'autre des chaînes de réception. On comprend que le microcontrôleur 28 effectue alors en fait une fonction de commutateur permettant de choisir entre les deux chaînes de réception, selon des critères programmables et modifiables si besoin était.

En sortie du microcontrôleur 28, les données reçues sont traitées de façon classique.

### EMETTEUR-RECEPTEUR

On comprend qu'il est possible, sur la base des descriptions de l'émetteur 6 et du récepteur 15 qui précèdent, de réaliser un émetteur-récepteur (également appelé transceiver) capable de fonctionner sur deux fréquences selon le principe décrit ci-dessus.

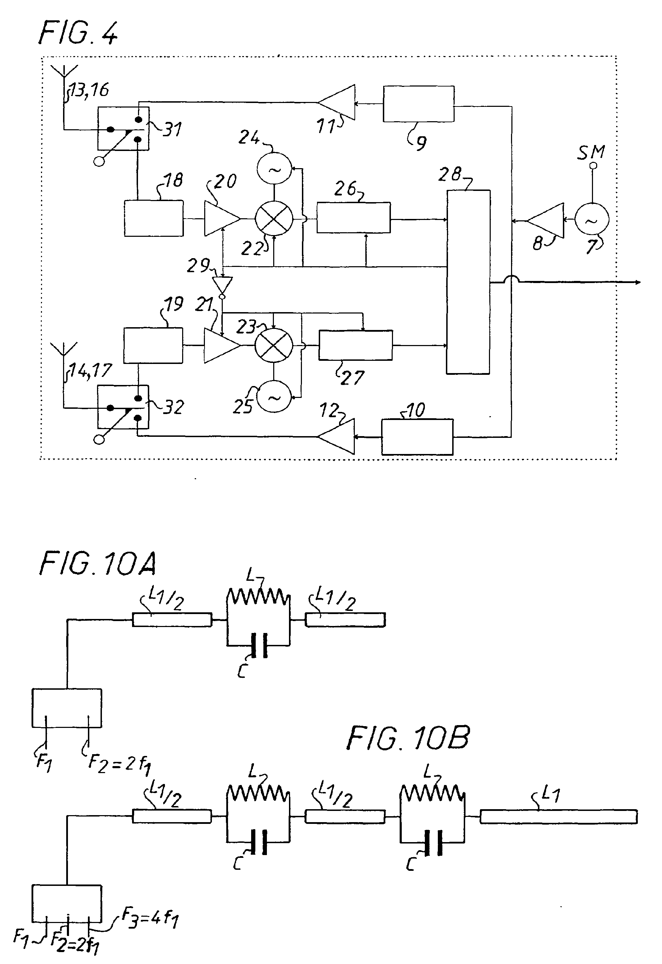

Le schéma fonctionnel d'un tel émetteur-récepteur est présenté à la figure 4.

On reconnaît sur ce schéma l'oscillateur 7 de fréquence f1, l'amplificateur 8, les filtres passe bandes 9 et 10 centrés sur des fréquences N.f1 (fN) et M.f1 (fM), suivis des amplificateurs 11 et 12, aptes à être commandés par des dispositifs non détaillés.

Ces amplificateurs 11, 12 attaquent des commutateurs de fonction 31, 32, de type classique, dont la fonction est de sélectionner entre le mode émission et le mode réception pour le dispositif émetteur-récepteur. En mode émission, ces commutateurs envoient les signaux issus des amplificateurs 11, 12 vers les antennes 13, 14.

Les mêmes antennes 13, 14 reçoivent des signaux entrant, et les transmettent à des filtres passe-bande 18, 19, centrés sur f1 et f2.

Le dispositif muni de l'inverseur 29 alimente l'une ou l'autre des chaînes de réception, centrée soit sur f1, soit sur f2, selon un critère de choix de canal basé sur la qualité de réception du signal et détaillé plus loin.

Les chaînes de réception sont alors en tous points identiques à ce qui a été décrit plus haut.

On peut ainsi réaliser un réseau de communication radio du type connu sous le nom half-duplex reposant sur l'utilisation desdits émetteur-récepteurs (transceivers).

### FONCTIONNEMENT

Le procédé de transmission d'une information Iₒ (tel qu'un signal à au moins deux états) fournie à l'entrée de moyens d'émission et exploitable à la sortie de moyens de réception, consiste selon l'invention à exploiter les harmoniques N.f1 et M.f1 de l'oscillateur 7 de fréquence f1 (M et N étant deux entiers positifs différents, chacun supérieur ou égal à 1), et dans le mode préféré de réalisation, à émettre ces deux fréquences N.f1 et M.f1 selon une technique classique de diversité, et à les recevoir également en diversité.

Comme on l'a vu, le dispositif décrit à titre d'exemple fonctionne en utilisant une modulation d'amplitude de type « tout ou rien » (en anglais OOK pour « On-Off Keying ») : le signal modulant représentant une information à transmettre est appliqué sur l'entrée modulation (figure 2). L'information à transmettre est typiquement un message formé d'une succession de données binaires.

Chaque émetteur 6 émet alors une trame qui contient plusieurs fois une partie calibrée connue du récepteur, qui est avantageusement un identifiant de l'émetteur, suivie du message proprement dit de l'émetteur.

On comprend qu'ainsi, un détecteur 2 comprenant un émetteur 6 tel que décrit émet vers la centrale de traitement 1 son identité à titre de message calibré, avant d'envoyer un message de détection ou d'état proprement dit.

Chaque trame est émise par un détecteur 2 donné à plusieurs reprises, séparées par des intervalles de temps suivant une logique prédéterminée (par exemple deux émissions séparées par un temps aléatoirement choisi dans une plage donnée), pour augmenter encore les chances de faire passer le message à la centrale de traitement 1.

En réception, deux chaînes de réception centrées sur les deux fréquences émises simultanément sont activées non simultanément, selon un critère de qualité et / ou de conformité de signal reçu, critère qui est mémorisé dans une mémoire du microcontrôleur 28 et calculé par ce microcontrôleur 28.

Ce procédé permet de choisir la fréquence de réception écoutée, N.f1 ou M.f1, le récepteur 15 étant capable de démoduler les fréquences N.f1 et M.f1 non simultanément.

De cette manière, si l'un des canaux de transmission (fN, fM) se trouve perturbé, il est possible de récupérer le signal contenant l'information I₀ à partir du second canal non perturbé en pilotant le dispositif inverseur 29 du récepteur 15 de manière à alimenter en écoute la chaîne de réception centrée sur ce canal non perturbé.

Dans le mode de fonctionnement préféré, le récepteur 15 (par exemple celui de la centrale de traitement 1) est normalement en mode « éteint » pour consommer le minimum d'énergie, et passe en mode normal d'écoute à intervalles réguliers pour de courtes périodes de temps.

A chacun de ses réveils, le récepteur n'écoute qu'une seule des deux fréquences (par exemple f1). Si aucun signal n'arrive sur cette fréquence (selon un critère de mesure de la puissance reçue sur la fréquence écoutée, inférieure à un seuil de puissance prédéterminé), le récepteur 15 se « rendort » très rapidement.

On remarque que, de manière à ce que la probabilité que le récepteur soit en éveil au moment d'une émission par l'un quelconque des émetteurs, ledit récepteur se réveille à des intervalles très rapprochés (de longueur inférieure à la durée d'une trame).

Par contre si un signal arrive sur la fréquence f1, le récepteur 15 maintient son écoute pendant un temps suffisant pour assurer qu'au moins une partie calibrée (le nombre de réceptions correctes requis étant programmable et mémorisé dans le microcontrôleur 28) arrive sur le récepteur.

A ce moment, si le récepteur 15 reconnaît une partie calibrée (identifiant un détecteur dont l'identité a été préalablement mémorisée), il maintient son écoute sur cette seule fréquence pour pouvoir démoduler le signal et recevoir le message émis par ledit détecteur 2 identifié.

Le critère de reconnaissance de partie calibrée comporte une comparaison du signal reçu avec une série d'identifiants de détecteurs 2 mémorisés dans le microcontrôleur 28. Un calcul de taux d'erreurs pour ce message calibré identifié est alors réalisable, et le passage en-dessous d'un seuil prédéterminé (nombre de bits justes / faux) entraîne le changement de canal écouté.

Dans le cas où le récepteur 15 ne reconnaît pas la partie calibrée, le signal étant de mauvaise qualité, par exemple du fait de perturbations, le récepteur 15 passe sur l'écoute de l'autre fréquence (sur l'ordre du microcontrôleur 28, qui provoque un changement d'état de la commande C).

Plusieurs situations peuvent alors se présenter :
- si le récepteur 15 ne reçoit pas de signal sur cette seconde fréquence (f2) (mesure de puissance reçue sur la fréquence écoutée inférieure à un seuil prédéterminé), il repasse en mode « éteint » car le signal reçu sur la première fréquence provenait probablement d'autres appareils indépendants. Dans ce cas, la seconde fréquence permet d'éviter une fausse alarme.
- si le récepteur 15 reconnaît au moins une fois (le nombre de réceptions correctes requis étant programmable et mémorisé dans le microcontrôleur 28) une partie calibrée correspondant à l'identifiant d'un émetteur connu, il poursuit l'écoute du message émis par ledit détecteur, et traite l'information reçue de façon classique. Dans ce cas, l'usage d'une seconde fréquence permet de recevoir un message clairement alors que la première fréquence seule n'aurait pas permis de recevoir le message.
- si le récepteur 15 ne reconnaît pas, dans le signal reçu sur la seconde fréquence écoutée, une partie calibrée identifiant un de ses émetteurs, une alarme spécifique ou un message de télésurveillance est déclenché, puisque une perturbation simultanée des deux fréquences écoutées est observée, en dépit d'un écartement spectral des deux fréquences (lorsqu'il s'agit d'harmoniques d'une même fréquence).

Il est clair qu'on a bien créé ici un critère de qualité de signal reçu, selon lequel l'écoute est réalisée sur l'une ou sur l'autre des fréquences émises, mais pas sur les deux à la fois.

On comprend que le dispositif selon l'invention présente à la fois l'avantage de fournir une redondance dans l'émission du signal par l'émission simultanée sur deux fréquences éloignées, et par ailleurs évite une augmentation excessive de la consommation d'énergie, dans la mesure où la seconde fréquence n'est écoutée que lorsque la première est trop perturbée, et où les éléments « actifs » de la seconde chaîne de réception ne sont alimentés que lors de l'écoute de ladite seconde fréquence.

### VARIANTES

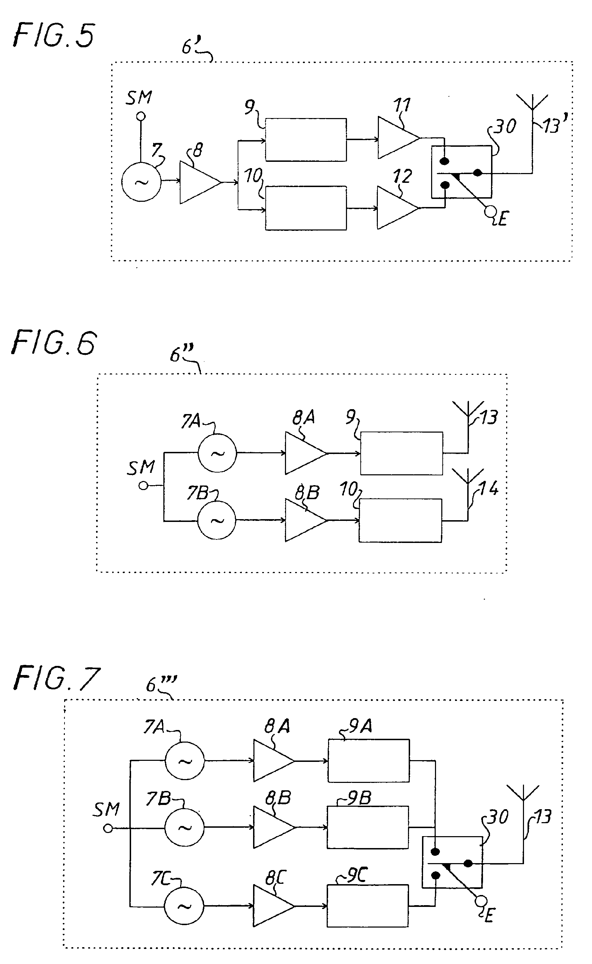

Dans une première variante d'émetteur 6', illustrée par la figure 5, qui se compare alors à la figure 2, un commutateur 30 est ajouté en sortie des amplificateurs 11, 12. Ce commutateur 30 est piloté par une commande E. En sortie, le commutateur 30 est relié à une antenne d'émission 13'.

Dans cette variante, la commande E assure l'émission d'un message sur la première fréquence f1, puis la ré-émission de ce même message sur la seconde fréquence f2. La commande du commutateur 30 peut être un signal émanant d'un microcontrôleur (non représenté) qui maintient le commutateur 30 dans une position le temps d'un message, puis dans la seconde position le temps d'un second message, etc.

Cet émetteur 6' permet de réaliser l'émission d'une trame (ou d'un ensemble composé de plusieurs trames) alternativement sur les deux fréquences utilisées, ces fréquences étant ici encore des harmoniques obtenus avec un seul oscillateur dont on utilise avantageusement le fondamental f1 et l'harmonique deux : f2=2 x f1.

Dans une seconde variante d'émetteur 6 , illustrée par la figure 6, l'oscillateur 7 unique est remplacé par deux oscillateurs 7A, 7B, suivis d'amplificateurs 8A, 8B, le reste de l'émetteur 6 étant sensiblement sans changement. La modulation est par exemple de type OOK. Il est clair que ce dispositif peut être étendu à plus de deux fréquences très simplement.

Il est ici possible soit d'alimenter en même temps les deux chaînes d'émission si il y a émission simultanée sur les deux fréquences, soit en variante d'alimenter seulement une des deux chaînes d'émission à un instant donné dans le cas d'une émission sur une fréquence, puis de répétition du message sur l'autre fréquence.

La figure 7 illustre encore une autre variante d'émetteur 6', dans laquelle trois chaînes d'émission sont prévues; On reconnaît dans chaque chaîne d'émission un oscillateur 7A, 7B, 7C, un amplificateur 8A, 8B, 8C, et un filtre passe bande 9A, 9B, 9C. Un commutateur 30 piloté par une commande E permet l'envoi vers l'antenne 13 soit des signaux émanant des deux premières chaînes d'émission (7A, 8A, 9A, 7B, 8B, 9B), soit de la troisième chaîne d'émission (7C, 8C, 9C).

Ce dispositif réalise alors une émission d'un message d'abord sur deux premières fréquences, puis une répétition du message sur une troisième fréquence. Ces fréquences peuvent naturellement être des harmoniques d'une même fréquence fondamentale.

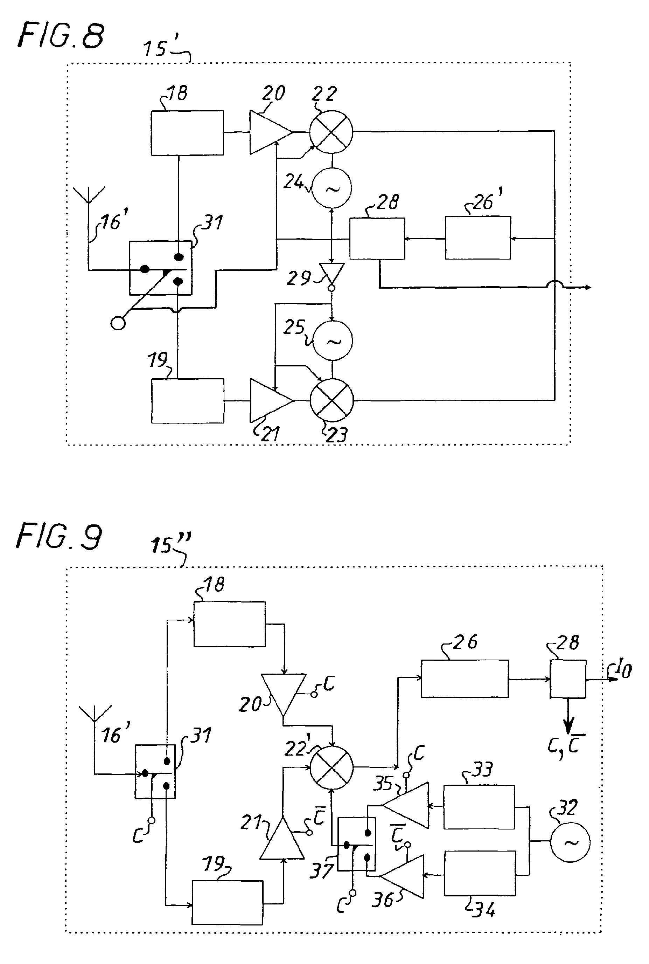

Dans une variante de récepteur 15' illustrée par la figure 8, une seule antenne de réception 16' est utilisée. Elle est suivie d'un commutateur 31 (piloté également par le microcontrôleur 28). Ce commutateur 31 envoie le signal reçu soit sur une première chaîne de réception centrée sur une première fréquence f1, soit sur une seconde chaîne de réception centrée sur une seconde fréquence f2.

Selon une autre variante de réalisation de la présente invention, également présentée sur la figure 8, le dispositif récepteur comprend un oscillateur local 24 de réception, de fréquence fondamentale fₒₗ₁ et un oscillateur local 25 de réception, de fréquence fondamentale fₒₗ₂, ces fréquences étant choisies telles que la fréquence intermédiaire fᵢ soit identique pour la réception d'un signal à f1 et celle d'un signal à f2. L'avantage est ici lié à l'utilisation d'un seul démodulateur.

Une autre variante de récepteur 15 est illustrée par la figure 9. La première partie du récepteur 15 est identique au récepteur 15' illustré par la figure 8. Le signal est reçu par l'antenne 16' puis aiguillé sur une de deux voies : la première voie sélectionne la fréquence f1 par l'intermédiaire d'un filtre 18 associé à un amplificateur 20, et la seconde la fréquence f2 par l'intermédiaire d'un filtre 19 et d'un amplificateur 21.

Par contre, en sortie de l'amplificateur 20 (21), le signal entre dans un mélangeur unique 22', dans lequel il est combiné avec un signal de fréquence soit f1 soit f2 découlant d'un signal de fréquence f1 généré par un oscillateur unique 32 pouvant avantageusement intégrer un élément amplificateur classique, non détaillé ici.

Le signal émanant de l'oscillateur 32 se dirige sur deux voies. La première voie sélectionne la fréquence f1 par l'intermédiaire d'un filtre 33 associé à un amplificateur 35, et la seconde, la fréquence f2 par l'intermédiaire d'un filtre 34 associé à un amplificateur 36.

Un commutateur 37, par exemple un semi-conducteur, sélectionne la fréquence de réception f1 ou f2 entrant dans le mélangeur 22'.

Dans cette variante, on peut réaliser par exemple une réception homodyne, la fréquence de l'oscillateur local de réception étant identique à la fréquence porteuse reçue, caractérisée par un signal basse fréquence à la sortie du mélangeur 22', attaquant un système de remise en forme 26 suivi du microcontrôleur 28, qui pilote selon le critère de choix de canal décrit plus haut, les commandes (C et son inverse) d'alimentation des différents éléments de réception, et les commutateurs 31 et 37.

Il est clair que des combinaisons des variantes d'émetteur et de récepteur sont possibles.

Il est également clair que le nombre de fréquences n'est pas limité à deux, mais au contraire qu'il est possible de réaliser des dispositifs à trois fréquences, voire plus.

Dans ce cas, le récepteur 15 choisit une fréquence de réception parmi l'ensemble des fréquences utilisées. De cette manière, si l'un des canaux de transmission se trouve perturbé, il est possible de récupérer le signal contenant l'information à partir d'un autre canal non perturbé en positionnant le récepteur en écoute sur cet autre canal non perturbé. Dans le cas de trois fréquences, si la deuxième est elle aussi perturbée, le récepteur bascule sur la troisième fréquence.

Les fréquences choisies peuvent être des harmoniques quelconques d'une même fréquence f1.

Par ailleurs, le mode de modulation du signal peut être quelconque, par exemple modulation d'amplitude, de fréquence etc.

Dans une variante de critère de choix de canal, lorsque une partie calibrée est détectée par le récepteur 15 sur la fréquence écoutée à ce moment, ledit récepteur procède également à l'écoute de l'autre fréquence pendant un temps bref, et compare la qualité de signal reçu sur ces deux fréquences, choisissant alors d'écouter la fréquence qui fournit le meilleur niveau de signal.

Dans une autre variante de critère de qualité et de conformité de signal reçu, lors de la phase d'installation du dispositif, une mesure du bruit reçu sur chaque fréquence écoutée est réalisée, et mémorisée dans le récepteur 15.

Puis, à chaque phase d'écoute du récepteur 15, si un signal (mesure de puissance reçue supérieure à un seuil prédéterminé) est reçu sur la fréquence écoutée, un calcul de rapport signal/bruit (en utilisant la mesure de bruit réalisée lors de la phase d'installation du dispositif) est réalisé, et, si le résultat est inférieur à un second seuil prédéterminé, l'écoute est basculée sur la seconde fréquence. Dans le cas contraire, on poursuit l'écoute sur la première fréquence.

Dans un mode de réalisation illustré par la figure 10A, l'antenne d'émission et/ou de réception est formée éventuellement avantageusement de deux tronçons de longueur identique (quart de longueur d'onde de la fréquence 2f1), séparés par un circuit L, C parallèle équivalent à un circuit ouvert pour 2f1 et à un court circuit pour la fréquence f1.

Dans cette réalisation, lorsque un signal de fréquence 2f1 attaque l'antenne, seul le premier tronçon de l'antenne est actif, alors que lorsque un signal de fréquence f1 est envoyé, les deux tronçons de l'antenne sont actifs.

La figure 10b illustre un principe analogue dans le cas de trois fréquences avec trois tronçons de longueurs respectives L₁/2, L₁/2 et L₁, déterminant ainsi une antenne adaptée aux fréquences 4f1, 2f1 et f1.

L'usage d'une telle antenne dans le dispositif selon l'invention permet, entre autres, de réduire l'encombrement lié aux antennes sur les circuits imprimés.

La portée de la présente invention ne se limite pas aux détails des formes de réalisation ci-dessus considérées à titre d'exemple, mais s'étend au contraire aux modifications à la portée de l'homme de l'art. Elle s'étend par exemple à tout type de récepteur radio équipé ou non d'oscillateur interne.

## Revendications

1. Dispositif de transmission d'informations par voie radioélectrique comprenant au moins un émetteur (6) adapté à émettre un signal sur au moins deux fréquences (fN, fM), alternativement et/ou simultanément, et un récepteur (15) **caractérisé en ce que** le dispositif comporte des moyens (28) pour commander l'écoute par le récepteur (15) d'une seule des fréquences des émetteurs (6) à la fois, et pour passer de l'écoute d'une fréquence à l'écoute d'une autre fréquence selon un critère de qualité et / ou de conformité de signal reçu prédéterminé, lesdits moyens (28) étant adaptés à activer et à alimenter en énergie à un instant donné une seule chaîne de réception d'une dite fréquence.

2. Dispositif de transmission selon la revendication 1, **caractérisé en ce qu'**il comporte des moyens de passer en mode normal d'écoute d'une fréquence à intervalles réguliers de longueur inférieure à la durée d'une trame, de mesurer un niveau de puissance reçue sur la fréquence écoutée, de comparer cette mesure à un seuil de puissance prédéterminé, et de passer en mode « éteint » si le niveau est inférieur au seuil de puissance.

3. Dispositif de transmission selon l'une quelconque des revendications 1 à 2, **caractérisé en ce que** le critère de changement de la fréquence écoutée par le récepteur (15), comporte un critère de rapport signal/bruit entre le signal reçu et un niveau de bruit pré-mémorisé, inférieur à un seuil prédéterminé.

4. Dispositif de transmission selon l'une quelconque des revendications 1 à 3, **caractérisé en ce que** le critère de changement de la fréquence écoutée par le récepteur (15), comporte un critère de (nombre de bits justes / nombre de bits faux) lors de la réception d'une partie calibrée prédéterminée de signal, émis par les émetteurs (6) sur la fréquence écoutée, inférieur à un seuil prédéterminé.

5. Dispositif selon l'une quelconque des revendications 1 à 4, **caractérisé en ce que** l'émetteur (6) émet sur plusieurs fréquences (fN, fM) générées à partir d'un unique oscillateur (7).

6. Dispositif selon la revendication 5, **caractérisé en ce que** les fréquences (fN, fM) d'émission des émetteurs (6) sont la fréquence fondamentale (f1) de l'oscillateur (7) et le premier harmonique (f2) de cet oscillateur.

7. Dispositif selon la revendication 6, **caractérisé en ce que** la première fréquence est choisie dans la bande 434 MHz, et la seconde fréquence dans la bande 868 MHz.

8. Dispositif selon l'une quelconque des revendications 1 à 7,
**caractérisé en ce que** au moins un émetteur (6) est de type émission en diversité fréquentielle.

9. Dispositif selon l'une quelconque des revendications 1 à 8, **caractérisé en ce que** un émetteur (6) et un récepteur (15) sont regroupés en un seul appareil.

10. Dispositif selon la revendication 9, **caractérisé en ce qu'**il comporte des commutateurs de fonction (31, 32) adaptés à permettre la sélection du mode émission ou réception du dispositif.

11. Dispositif selon l'une quelconque des revendications 1 à 5, **caractérisé en ce que** le nombre de fréquences utilisées est supérieur ou égal à trois.

12. Dispositif selon l'une quelconque des revendications 1 à 11, **caractérisé en ce que** au moins un émetteur (6) ou un récepteur (15) comporte une antenne formée de plusieurs tronçons séparés par des filtres passe bas.

13. Système d'alarme comportant au moins un détecteur (2) émettant des messages par voie radioélectrique vers une centrale de traitement (1), **caractérisé en ce que** il comporte un dispositif selon l'une quelconque des revendications 1 à 10.

14. Procédé de transmission d'informations par voie radioélectrique entre au moins un émetteur (6) adapté(s) à émettre un signal sur au moins deux fréquences (fN, fM), communes aux différents émetteurs, alternativement ou simultanément, et un récepteur (15) **caractérisé en ce que** le procédé comporte :
a) l'émission d'un signal par l'émetteur (6) sur au moins deux fréquences (fN, fM) alternativement et/ou simultanément,
b) l'écoute par le récepteur (15) d'une seule des fréquences des émetteurs (6) à la fois,
c) et le passage de l'écoute d'une fréquence à l'écoute d'une autre fréquence selon un critère de qualité et / ou de conformité de signal reçu prédéterminé, une seule chaîne de réception d'une dite fréquence étant activée et alimenté à la fois.

## Claims

1. Apparatus for the transmission of information by radioelectric means comprising at least one emitter (6) adapted to emit a signal on at least two frequencies (fN, fM) alternatively and/or simultaneously, and a receiver (15), **characterised in that** the apparatus comprises means (28) for controlling listening by the receiver (15) to a single one of the frequencies of the emitters (6) at a time and for transferring listening to one frequency to listening to another frequency in accordance with a predetermined received signal quality and/or conformity criterion, said means (28) being adapted to activate and supply power to a single chain for reception of a said frequency at a given moment.

2. A transmission apparatus according to claim 1 **characterised in that** it comprises means for going into the normal mode of listening to a frequency at regular intervals of a shorter length than the duration of a frame, for measuring a power level received on the frequency listened to, for comparing said measurement to a predetermined power threshold, and for going into the 'switch-off' mode if the level is lower than the power threshold.

3. A transmission apparatus according to either one of claims 1 and 2 **characterised in that** the criterion for changing the frequency listened to by the receiver (15) comprises a signal/noise ratio criterion between the received signal and a pre-memorised noise level which is lower than a predetermined threshold.

4. A transmission apparatus according to any one of claims 1 to 3 **characterised in that** the criterion for changing the frequency listened to by the receiver (15) comprises a criterion of (number of true bits/number of false bits) upon reception of a predetermined calibrated portion of a signal emitted by the emitters (6) on the frequency listened to, which is below a predetermined threshold.

5. Apparatus according to any one of claims 1 to 4 **characterised in that** the emitter (6) emits on a plurality of frequencies (fN, fM) generated from a single oscillator (7).

6. Apparatus according to claim 5 **characterised in that** emission frequencies (fN, fM) of the emitters (6) are the fundamental frequency (f1) of the oscillator (7) and the first harmonic (f2) of said oscillator.

7. Apparatus according to claim 6 **characterised in that** the first frequency is selected in the band 434 MHz and the second frequency in the band 868 MHz.

8. Apparatus according to any one of claims 1 to 7 **characterised in that** at least one emitter (6) is of frequential diversity emission type.

9. Apparatus according to any one of claims 1 to 8 **characterised in that** an emitter (6) and a receiver (15) are combined in a single piece of equipment.

10. Apparatus according to claim 9 **characterised in that** it comprises function switching means (31, 32) adapted to permit selection of the emission or reception mode of the apparatus.

11. Apparatus according to any one of claims 1 to 5 **characterised in that** the number of frequencies used is greater than or equal to three.

12. Apparatus according to any one of claims 1 to 11 **characterised in that** at least one emitter (6) or receiver (15) comprises an antenna formed by a plurality of portions separated by low pass filters.

13. An alarm system comprising at least one detector (2) emitting messages by radioelectric means to a processing centre (1) **characterised in that** it comprises an apparatus according to any one of claims 1 to 10.

14. A process for transmitting information by radioelectric means between at least one emitter (6) which is or are adapted to emit a signal on at least two frequencies (fN, fM) common to the different emitters, alternatively or simultaneously, and a receiver (15), **characterised in that** the process comprises:
a) emission of a signal by the emitter (6) on at least two frequencies (fN, fM) alternatively and/or simultaneously,
b) listening by the receiver (15) to a single one of the frequencies of the emitters (6) at a time, and
c) going from listening to a frequency to listening to another frequency in accordance with a predetermined received signal quality and/or conformity criterion, a single reception chain for a said frequency being activated and powered at a time.

## Patentansprüche

1. Vorrichtung zur Übertragung von Informationen über Funk, enthaltend mindestens einen Sender (6), der dazu angepasst ist, ein Signal auf mindestens zwei Frequenzen (fN, fM) alternativ und/oder gleichzeitig auszusenden, und einen Empfänger (15), **dadurch gekennzeichnet, dass** die Vorrichtung Mittel (28) enthält zur Steuerung des Abhörens jeweils nur einer der Frequenzen des Senders (6) durch den Empfänger (15) und um gemäß eines vorbestimmten Kriteriums der Qualität und/oder der Konformität des empfangenen Signals vom Abhören einer Frequenz zum Abhören einer anderen Frequenz überzugehen, wobei die genannten Mittel (28) dazu angepasst sind, zu einem gegebenen Moment nur einen Empfangs-Kanal einer bestimmten Frequenz zu aktivieren und mit Energie zu versorgen.

2. Vorrichtung zur Übertragung nach Anspruch 1, **dadurch gekennzeichnet, dass** sie Mittel enthält, um in regelmäßigen Intervallen mit einer Länge, die geringer ist, als die Dauer eines Datenblocks, in den normalen Abhör-Modus einer Frequenz überzugehen, um einen Pegel der Leistung zu messen, die auf der abgehörten Frequenz empfangen wird, um diesen Messwert mit einer vorbestimmten Leistungs-Schwelle zu vergleichen, und um in einen "ausgeschalteten" Modus überzugehen, wenn der Pegel geringer ist als die Leistungs-Schwelle.

3. Vorrichtung zur Übertragung nach einem beliebigen der Ansprüche 1 bis 2, **dadurch gekennzeichnet, dass** das Kriterium für den Wechsel der durch den Empfänger (15) abgehörten Frequenz ein Kriterium des Verhältnisses Signal/Rauschen zwischen dem empfangenen Signal und einem zuvor gespeicherten Rausch-Pegel enthält, das geringer ist, als eine vorbestimmte Schwelle.

4. Vorrichtung zur Übertragung nach einem beliebigen der Ansprüche 1 bis 3, **dadurch gekennzeichnet, dass** das Kriterium für den Wechsel der durch den Empfänger (15) abgehörten Frequenz ein Kriterium der (Anzahl der korrekten Bits / Anzahl der falschen Bits) beim Empfang eines vorbestimmten, kalibrierten Teils des Signals, das durch die Sender (6) auf der abgehörten Frequenz ausgesendet wird, enthält, das geringer ist als eine vorbestimmte Schwelle.

5. Vorrichtung nach einem beliebigen der Ansprüche 1 bis 4, **dadurch gekennzeichnet, dass** der Sender (6) auf mehreren Frequenzen (fN, fM) aussendet, die ausgehend von einem einzigen Oszillator (7) erzeugt werden.

6. Vorrichtung nach Anspruch 5, **dadurch gekennzeichnet, dass** die Sende-Frequenzen (fN, fM) der Sender (6) die Grund-Frequenz (f1) des Oszillators (7) und die erste Oberschwingung (f2) dieses Oszillators sind.

7. Vorrichtung nach Anspruch 6, **dadurch gekennzeichnet, dass** die erste Frequenz aus dem 434 MHz-Band gewählt ist und die zweite Frequenz aus dem 868 MHz-Band.

8. Vorrichtung nach einem beliebigen der Ansprüche 1 bis 7, **dadurch gekennzeichnet, dass** mindestens ein Sender (6) von der Art der Aussendung mit Frequenz-Diversity ist.

9. Vorrichtung nach einem beliebigen der Ansprüche 1 bis 8, **dadurch gekennzeichnet, dass** ein Sender (6) und ein Empfänger (15) in einem einzigen Gerät zusammengefasst sind.

10. Vorrichtung nach Anspruch 9, **dadurch gekennzeichnet, dass** sie Funktions-Umschalter (31, 32) enthält, die dazu angepasst sind, die Auswahl des Sende- oder Empfangs-Modus der Vorrichtung zu ermöglichen.

11. Vorrichtung nach einem beliebigen der Ansprüche 1 bis 5, **dadurch gekennzeichnet, dass** die Anzahl der verwendeten Frequenzen größer oder gleich drei ist.

12. Vorrichtung nach einem beliebigen der Ansprüche 1 bis 11, **dadurch gekennzeichnet, dass** mindestens ein Sender (6) oder ein Empfänger (15) eine Antenne enthält, die aus mehreren, durch Tiefpass-Filter getrennten Abschnitten geformt ist.

13. Alarm-System, mindestens einen Detektor (2) enthaltend, der Nachrichten über ein Funk-Medium an eine Verarbeitungs-Zentrale (1) aussendet, **dadurch gekennzeichnet, dass** es eine Vorrichtung nach einem beliebigen der Ansprüche 1 bis 10 enthält.

14. Verfahren zur Übertragung von Informationen über Funk zwischen mindestens einem Sender (6), der/die dazu angepasst ist/sind, ein Signal auf mindestens zwei Frequenzen (fN, fM), die den verschiedenen Sendern gemeinsam sind, alternativ oder gleichzeitig auszusenden, und einem Empfänger (15), **dadurch gekennzeichnet, dass** das Verfahren enthält:
a) die Aussendung eines Signals durch den Sender (6) auf mindestens zwei Frequenzen (fN, fM) alternativ und/oder gleichzeitig,
b) das Abhören jeweils nur einer der Frequenzen des Senders (6) durch den Empfänger (15),
c) und den Übergang vom Abhören einer Frequenz zum Abhören einer anderen Frequenz gemäß eines vorbestimmten Kriteriums der Qualität und/oder der Konformität des empfangenen Signals, wobei jeweils nur ein Empfangs-Kanal einer genannten Frequenz aktiviert und versorgt wird.
